# FASCICULE DE BREVET EUROPEEN

(11) **EP 3 838 056 B1**
(45) Date de publication et mention de la délivrance du brevet: **31.08.2022**
(21) Numéro de dépôt: 20215286.4
(22) Date de dépôt: 18.12.2020
(51) Int. Cl.: A45D 1/04, B01J 47/024, A45D 1/06, A45D 1/00, B01J 39/04

(54) **CARTOUCHE DE FILTRATION D'EAU ET DISPOSITIF PORTABLE DE FILTRATION ASSOCIÉ POUR REMPLISSAGE DE RÉSERVOIRS D'APPAREILS DOMESTIQUES**
WASSERFILTERKARTUSCHE UND ENTSPRECHENDES TRAGBARES FILTERGERÄT ZUM FÜLLEN VON BEHÄLTERN VON HAUSHALTSGERÄTEN
WATER FILTERING CARTRIDGE AND ASSOCIATED PORTABLE FILTERING DEVICE FOR FILLING TANKS OF HOUSEHOLD APPLIANCES

(30) Priorité: 19.12.2019 FR 1914941
(43) Date de publication de la demande: 23.06.2021
(73) Titulaire: SEB S.A., 69130 Ecully (FR)
(72) Inventeur: FEREYRE, Régis, 69390 CHARLY (FR); SABATTIER, Johan, 69370 SAINT-DIDIER-AU-MONT-D'OR (FR)
(74) Mandataire: SEB Développement

(56) Documents cités:
- EP-A1- 1 770 069
- EP-A1- 2 449 914
- FR-A1- 2 648 163
- US-A1- 2009 039 037

## Description

### DOMAINE DE L'INVENTION

La présente invention concerne le domaine des cartouches et dispositifs de filtration de liquide, notamment pour la filtration de l'eau, par exemple pour diminuer sa teneur en calcaire et/ou sels minéraux, et en particulier des dispositifs de déminéralisation compatibles avec des appareils électroménagers domestiques, de coiffure par exemple.

### ETAT DE LA TECHNIQUE

On connaît de l'état de la technique des systèmes de filtration d'eau permettant de purifier l'eau, pouvant être disposés dans des gourdes ou des carafes par exemple. De tels systèmes peuvent comprendre différents types de filtres, par exemple un filtre à charbon actif, un filtre à sédiment, ou des membranes à fibres creuses permettant l'élimination de bactéries, de résidus chimiques ou de calcaire par exemple.

Cependant, de tels systèmes de filtration, notamment à cause de leurs dimensions, ne sont pas adaptés dans un usage pour des appareils électriques à vapeur, par exemple des appareils de coiffure, comprenant des réservoirs de liquide de petite taille.

De tels appareils peuvent projeter de la vapeur sur les cheveux pour améliorer la mise en forme des cheveux. Le document WO2014064660 décrit par exemple un appareil à coiffer comprenant un réservoir de liquide, et dans lequel une mâchoire comprend un système de vaporisation, et un système de distribution de vapeur vers une mèche de cheveux. Un liquide, typiquement de l'eau, est stocké dans le réservoir, et injecté dans le système de vaporisation. Sous l'action de moyens de chauffage, le liquide passe à l'état de vapeur dans le système de vaporisation et peut atteindre le système de distribution, comprenant une pluralité d'orifices orientés de sorte à projeter la vapeur sur une mèche de cheveux pincée entre deux surfaces de traitement.

Cependant, une augmentation rapide de la température du liquide, qui peux contenir des minéraux, dans la chambre de vaporisation, peut entrainer un dépôt progressif de tartre ou de calcaire à l'intérieur ou à une extrémité de la canalisation permettant le passage du liquide du réservoir vers le système de vaporisation, jusqu'à une obstruction. Le dépôt progressif de tartre peut également avoir lieu directement dans le système de vaporisation lui-même. Ce phénomène de dépôt de tartre a pour conséquence d'entrainer un disfonctionnement de l'appareil à coiffer et de réduire sa durée de vie.

Certains appareils intègrent des solutions permettant de limiter l'entartrage, voire même pour filtrer l'eau circulant dans ledit appareil depuis le réservoir, mais ces solutions viennent complexifier lesdits appareils, rendant leur encombrement plus conséquent, leur fabrication plus difficile et leur coût plus important.

Pour réduire les risques d'entartrage des appareils, il est donc généralement préconisé d'utiliser de l'eau déminéralisée. Malheureusement, une telle solution est contraignante pour les utilisateurs et en pratique peu appliquée, ce qui implique que les appareils restent soumis aux risques d'entartrage.

Par ailleurs les dispositifs existants pour traiter l'eau sont encombrants et pas adaptés pour une utilisation avec des appareils domestiques ayant un réservoir de petite taille, et étant par ailleurs généralement destinés à être transportés.

Il existe donc un besoin pour un dispositif de filtration de liquide, permettant notamment de filtrer de l'eau pour la rendre moins dure, qui soit adapté pour une utilisation avec des appareils domestiques portables ayant notamment des réservoirs de petite taille.

En particulier, il existe un besoin pour un dispositif de filtration de liquide qui soit portable et permettent un remplissage précis du réservoir, tout en ayant une longévité importante, notamment en ce qui concerne son pouvoir filtrant. EP 1 770 069 A1, EP 2 449 914 A1, US 2009/039037 A1 et FR 2 648 163 A1 sont d'autres documents pertinents.

### EXPOSE DE L'INVENTION

Selon un premier aspect, il est proposé une cartouche de filtration d'un liquide à filtrer, comprenant une résine de filtration pour filtrer le liquide à filtrer, la cartouche de filtration s'étendant entre un orifice d'entrée permettant au liquide à filtrer d'accéder à la résine de filtration et un orifice de sortie permettant au liquide filtré à travers la résine de filtration de quitter la cartouche de filtration; caractérisé en ce que la cartouche de filtration comprend un système de maintien de liquide agencé dans la résine de filtration du côté de l'orifice d'entrée, le système de maintien de liquide comprenant un organe de siphon s'étendant entre une extrémité ouverte et une extrémité fermée, et en ce que l'orifice d'entrée de la cartouche de filtration comprend un organe de guidage de liquide ayant une portion convergente en direction de l'organe de siphon, l'organe de guidage étant agencé au moins en partie dans l'organe de siphon à travers l'extrémité ouverte.

Des aspects préférés mais non limitatif de cette cartouche de filtration pris seuls ou en combinaison, sont les suivants :
- l'organe de guidage de liquide a une forme d'entonnoir avec une portion tubulaire s'étendant à partir de la portion convergente, la portion tubulaire étant agencée au moins en partie dans l'organe de siphon à travers l'extrémité ouverte.
- le système de maintien de liquide comprend en outre une grille agencée entre l'organe de guidage et l'organe de siphon au niveau de l'extrémité ouverte de l'organe de siphon.
- la cartouche de filtration comprend une grille avale positionnée au niveau de l'orifice de sortie de la cartouche de filtration dans le sens de déplacement du liquide de l'orifice d'entrée vers l'orifice de sortie.
- la cartouche de filtration comprend une grille amont positionnée avant l'orifice d'entrée de la cartouche de filtration dans le sens de déplacement du liquide de l'orifice d'entrée vers l'orifice de sortie.

Selon un deuxième aspect, il est proposé un dispositif portable de filtration d'un liquide à filtrer comprenant une cartouche de filtration telle que décrite précédemment,
un réservoir de liquide pour stocker du liquide, et un embout de distribution pour évacuer le liquide filtré du dispositif portable de filtration.

Des aspects préférés mais non limitatif de ce dispositif portable de filtration pris seuls ou en combinaison, sont les suivants :
- le réservoir et/ou la cartouche de filtration et/ou l'embout de distribution sont assemblés les uns aux autres de manière amovible.
- le réservoir est agencé du côté de l'orifice d'entrée de la cartouche de filtration, et l'embout de distribution est agencé du côté de l'orifice de sortie de la cartouche de filtration.
- le réservoir comprend une extrémité ouverte permettant un remplissage dudit réservoir, l'extrémité ouverte étant destinée à être en contact avec l'orifice d'entrée de la cartouche de filtration en position assemblée, et une extrémité fermée comprenant un clapet d'admission d'air destiné à déclencher une vidange du réservoir au travers de la cartouche de filtration vers l'embout de distribution

- le réservoir est agencé du côté de l'orifice de sortie de la cartouche de filtration, et l'embout de distribution est agencé du côté de l'orifice d'entrée de la cartouche de filtration.
- le dispositif portable de filtration comprend une portion centrale s'étendant entre le réservoir et l'embout de distribution dans laquelle est insérée la cartouche de filtration, la portion centrale comprenant un canal de circulation de liquide du réservoir vers l'embout de distribution.
- le dispositif portable de filtration comprend en outre un élément de déviation du flux de liquide positionné en aval de l'orifice de sortie de la cartouche de filtration et prévu pour diriger le liquide du réservoir en direction de l'embout de distribution sans atteindre l'orifice de sortie de la cartouche de filtration afin d'empêcher au liquide de traverser une nouvelle fois la cartouche de filtration.
- le réservoir et l'embout de distribution sont tous deux agencés du côté de l'orifice de sortie de la cartouche de filtration, le réservoir étant positionné entre la cartouche de filtration et l'embout de distribution.
- le dispositif portable de filtration comprend en outre une valve prévue pour empêcher un écoulement du réservoir vers l'embout de distribution tant qu'une force suffisante n'est pas exercée sur des parois du réservoir.
- le réservoir a une capacité inférieure à 50mL, de préférence comprise entre 30mL et 40m L.
- l'embout de distribution est un bec verseur cylindrique avec une section circulaire de sortie ayant un rayon inférieur à 2 mm.

Selon un troisième aspect, il est proposé un système de coiffure comprenant un appareil de coiffure avec réservoir de liquide et un dispositif portable de filtration selon le deuxième aspect, le réservoir de liquide de l'appareil de coiffure ayant un orifice de remplissage prévu pour un couplage amovible de l'embout de distribution du dispositif portable de filtration.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1 est une vue de côté d'un dispositif portable de filtration de liquide selon un premier exemple de réalisation, incorporant la cartouche de filtration proposée.
[Fig. 2] La figure 2 est une vue en coupe du dispositif portable de filtration de liquide de la figure 1.
[Fig. 3] La figure 3 est une vue en perspective d'un exemple de système de maintien d'eau dans la résine de la cartouche de filtration de liquide.
[Fig. 4] La figure 4 est une vue en perspective d'un exemple de la cartouche de filtration contenant une résine de filtration pour le dispositif portable de filtration de la figure 1.
[Fig. 5] La figure 5 est une vue de côté d'un clapet d'admission d'air, permettant la vidange du dispositif portable de filtration de liquide de la figure 1.
[Fig. 6] La figure 6 est une vue de côté d'un dispositif portable de filtration d'eau selon un deuxième exemple de réalisation, incorporant la cartouche de filtration proposée.
[Fig. 7] La figure 7 est une vue en coupe du dispositif portable de filtration d'eau de la figure 6.
[Fig. 8] La figure 8 est une vue en coupe d'un exemple de la cartouche de filtration contenant une résine de filtration pour le dispositif portable de filtration de la figure 6.

Seuls les éléments nécessaires à la compréhension de l'invention ont été représentés.

### DESCRIPTION DETAILLEE DE L'INVENTION

Les différentes figures illustrent une cartouche de filtration pour filtrer de l'eau destinée à être versée dans le réservoir d'un appareil électroménager, et en particulier dans le réservoir d'un appareil à coiffer, comme par exemple un lisseur vapeur. Une telle cartouche de filtration peut être insérer dans un dispositif portable de filtration de liquide adapté, illustré également dans les figures.

Lorsque l'appareil à coiffer n'est pas utilisé, ni la cartouche de filtration ni la résine de filtration ne sont utilisées ; il est alors possible que la résine de filtration sèche. Cela peut entrainer une dégradation rapide des propriétés de filtration de la résine. Il est donc intéressant de maintenir la résine à un certain niveau d'humidité afin de préserver ses propriétés chimiques.

Un but de l'invention est de remédier au moins en partie aux inconvénients précités et de proposer un dispositif portable de filtration du calcaire adapté au remplissage du réservoir d'un appareil électroménager, et permettant de maintenir constamment un niveau d'humidité suffisant dans la résine de traitement de l'eau.

La description qui suit porte sur une cartouche de filtration et un dispositif portable de filtration portable intégrant une telle cartouche de filtration et permettant un remplissage simple et aisé d'un réservoir de faible dimension, par exemple d'un réservoir intégré dans une mâchoire d'un appareil de coiffure à vapeur. Un tel réservoir de faible dimension a typiquement un volume compris entre 3 cm3 et 50 cm3, préférentiellement entre 5 cm3 et 20 cm3, par exemple de l'ordre de 10 cm3. L'invention n'est toutefois pas limitée à être utilisée pour remplir le réservoir d'un appareil de coiffure à vapeur. En effet, on pourrait parfaitement utiliser l'invention pour remplir le réservoir, de petite dimension, d'autres appareils électroménagers fonctionnant avec de la vapeur, comme par exemple un fer à repasser.

Le dispositif portable de filtration proposé permet avantageusement de filtrer la totalité des minéraux contenus dans un liquide. En particulier, le dispositif portable de filtration permet d'adoucir de l'eau, c'est-à-dire de diminuer la dureté de l'eau, afin d'empêcher une formation ultérieure de calcaire dans l'appareil électroménager, pouvant limiter sa durée de vie.

Comme il sera détaillé par la suite, un tel dispositif portable de filtration est pratique et son utilisation est peu contraignante pour un utilisateur. Il est compact et ergonomique, afin d'être facilement transportable.

De manière générale, le dispositif portable de filtration comprend une première portion, appelée réservoir, permettant de contenir et stocker un liquide, sans altérer ses propriétés.

Le dispositif portable de filtration comprend une deuxième portion, appelée chambre de filtration, dans laquelle est disposé un filtre, comme par exemple une cartouche de filtration intégrant une résine de filtration. C'est dans la deuxième portion qu'a lieu le traitement du liquide, et notamment la déminéralisation. La résine de filtration est de préférence conçue pour déminéraliser l'eau la traversant.

La chambre de filtration communique avantageusement avec un bec verseur ayant des dimensions adaptées au remplissage d'un réservoir de petite taille, comme par exemple celui d'un appareil de coiffure portable.

De manière avantageuse encore, la chambre de filtration comprend un système de maintien de liquide prévu pour maintenir une certaine humidité dans le filtre et éviter qu'il ne dessèche.

Par exemple, le système de maintien de liquide est agencé à l'intérieur de la résine de filtration de la cartouche de filtration.

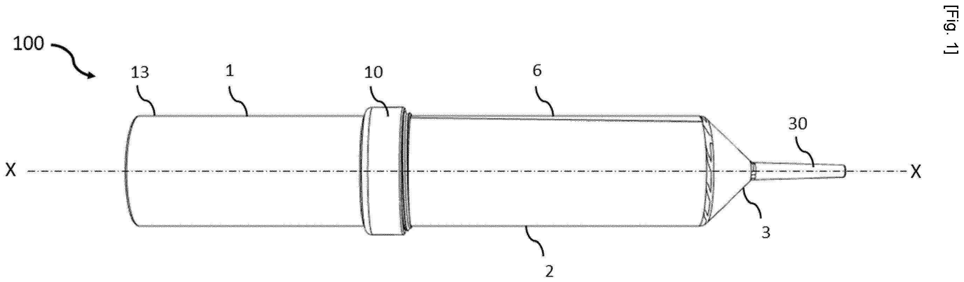

La figure 1 illustre une vue d'ensemble du dispositif portable de filtration 100 de liquide selon un exemple particulier de réalisation.

Le dispositif portable de filtration 100 comprend un réservoir 1 destiné à contenir un liquide à filtrer.

Le liquide à filtrer peut être de l'eau comprenant des minéraux, et en particulier des ions calcium. Le liquide à filtrer peut avoir un titre hydrotimétrique (aussi appelé dureté) typiquement supérieur à 7°f. Typiquement, le liquide à filtrer est de l'eau directement issue du robinet, également appelée eau dure. L'invention permet de traiter cette eau dure issue du robinet de manière à la rendre parfaitement compatible avec son utilisation dans un appareil électroménager (c'est-à-dire en minimisant son impact sur la fiabilité et la durée de vie de l'appareil).

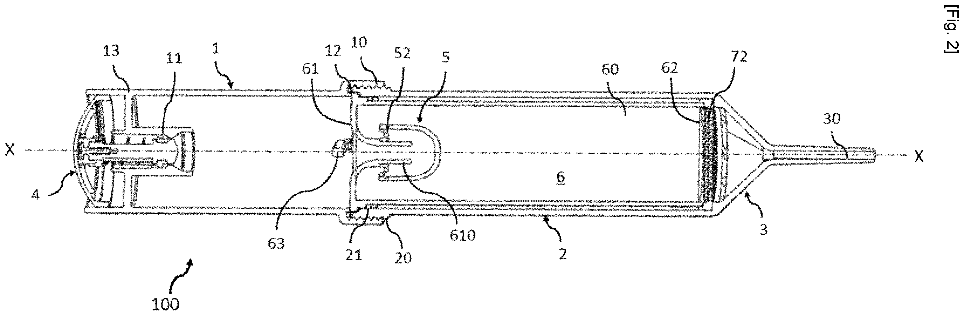

Dans l'exemple de réalisation illustré sur les figures 1 et 2, le réservoir 1 a une forme sensiblement cylindrique, et s'étend selon un axe longitudinal XX.

De préférence, le réservoir 1 a une forme ergonomique et compacte, permettant une manipulation pratique par un utilisateur, et en particulier par les doigts d'un utilisateur, lors d'un remplissage.

Par exemple, le réservoir 1 peut avoir une longueur inférieure à 10 cm, de préférence comprise entre 5 cm et 8 cm, de préférence encore environ égale à 7.5 cm.

Par exemple, le réservoir 1 peut avoir un diamètre inférieur à 5 cm, de préférence compris entre 3 cm et 4 cm, de préférence encore environ égal à 3.4 cm.

Par exemple le réservoir 1 a une capacité inférieure à 50mL, de préférence une capacité comprise entre 30mL et 40mL. Il est ainsi possible de remplir plusieurs fois le réservoir de l'appareil électroménager.

Le réservoir 1 comprend une première extrémité 10, ouverte, par laquelle peut être versé du liquide à filtrer (de l'eau dure par exemple). Le réservoir 1 comprend par ailleurs une deuxième extrémité 13, étanche, opposée à la première extrémité et formant le fond du réservoir 1. Il est ainsi possible de remplir le réservoir 1 avec du liquide en le remplissant via l'extrémité ouverte 10. Préférentiellement, les dimensions de la première extrémité 10 sont telles qu'il est possible de la positionner directement sous un robinet pour remplir facilement le réservoir 1.

Le dispositif portable de filtration 100 comprend également une chambre de filtration 2 destinée à être assemblée sur le réservoir 1, au niveau de l'extrémité ouverte 10.

Dans un exemple de réalisation, la chambre de filtration 2 est une portion sensiblement cylindrique, s'étendant également selon l'axe longitudinal XX. En d'autres termes, le réservoir 1 et la chambre de filtration 2 sont coaxiaux.

La chambre de filtration 2 a une première extrémité 20, ouverte, destinée à être couplée avec le réservoir 1 au niveau de son extrémité ouverte 10, de sorte qu'un passage de liquide puisse être effectué depuis le réservoir 1 vers la chambre de filtration 2.

A l'extrémité opposée de la première extrémité 20, la chambre de filtration 2 comprend un embout de distribution 3 prévu pour permettre un remplissage d'un contenant, notamment un réservoir de petite taille, avec du liquide ayant été filtré dans la chambre de filtration 2.

La chambre de filtration 2 est destinée à être montée sur le réservoir 1 de manière amovible. Ainsi il est possible pour l'utilisateur de désolidariser le réservoir 1 du dispositif portable de filtration 100, par exemple pour remplir le réservoir 1.

Par exemple, l'extrémité ouverte 10 du réservoir 1 peut comprendre sur une paroi interne un filetage. De même, l'extrémité ouverte 20 de la chambre de filtration 2 peut comprendre sur une paroi externe un filetage complémentaire. Ainsi, il est possible d'assembler simplement la chambre de filtration 2 sur le réservoir 1 rempli du liquide à filtrer par vissage. D'autres moyens d'assemblage peuvent être également envisagés.

De préférence, l'assemblage réalisé entre le réservoir 1 et la chambre de filtration 2 est étanche, aussi bien à l'eau qu'à l'air. Cela permet avantageusement d'éviter des fuites du liquide en dehors du dispositif 100. Cela permet également de maitriser le moment où la filtration sera déclenchée et le liquide déversé par l'embout de distribution 3, comme cela détaillé par la suite. L'étanchéité du dispositif peut par exemple être obtenue par un joint 12 disposé entre le réservoir 1 et la chambre de filtration 2.

De manière avantageuse, le réservoir 1 peut avoir un volume inférieur ou égal au volume de la chambre de filtration 2. Cela permet que la totalité du liquide à filtrer contenu dans le réservoir 1 puisse être filtrée en une seule opération à travers la chambre de filtration 2 avant d'être expulsée en dehors du dispositif portable de filtration.

De manière avantageuse, le réservoir 1 peut avoir un volume inférieur ou égal au volume du réservoir de l'appareil destiné à être rempli. Cela permet d'éviter les risques de sur-remplissage du réservoir de l'appareil, et des débordements éventuels.

A l'intérieur de la chambre de filtration 2 est disposé un filtre, sous la forme par exemple d'une résine de filtration 6, destinée à traiter le liquide à filtrer, et notamment à éliminer les minéraux du liquide qui favorisent la formation de calcaire.

Le filtre est agencé dans la chambre de filtration 2 de sorte que le liquide entrant dans la chambre de filtration 2 depuis le réservoir 1 passe à travers le filtre avant d'atteindre l'embout de distribution 3 formant orifice de sortie du dispositif portable de filtration.

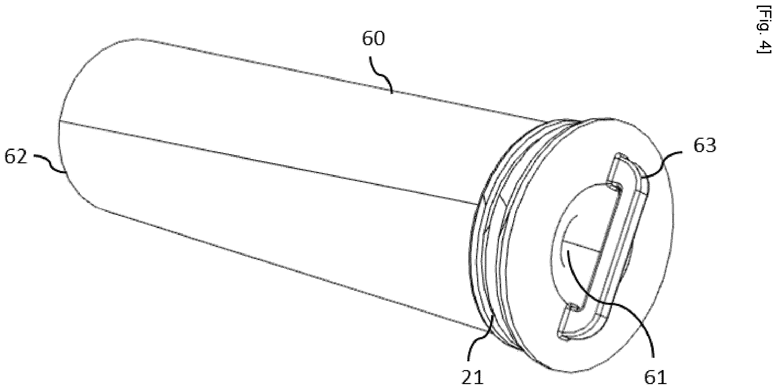

Dans un exemple de réalisation illustré notamment sur la figure 4, la résine de filtration 6 est intégrée dans une cartouche de filtration 60, de préférence amovible, ayant par exemple une forme cylindrique complémentaire de la cavité intérieure de la chambre de filtration 2. La cartouche 60 est en effet destinée à être insérée dans la portion cylindrique de la chambre de filtration 2. Cela permet le remplacement éventuel de la cartouche 60 et donc de la résine de filtration 6, par exemple après un certain nombre de filtration (d'utilisation) sans avoir à remplacer tout le dispositif.

Un filetage peut être prévu sur la cartouche 60 pour pouvoir la fixer à la chambre de filtration 2.

De préférence, la cartouche 60 comprend une poignée 63 permettant une installation et un retrait facile de la résine de filtration 6 dans et hors de la chambre de filtration 2.

Des grilles peuvent être placées en amont et/ou en aval de la résine de filtration 6 dans le sens de déplacement du liquide du réservoir 1 vers l'embout de distribution 3. La ou les grilles peuvent servir de grille(s) de maintien de la résine de filtration 6 dans la chambre de filtration 2. Cette fonction de maintien est particulièrement avantageuse lorsque la résine de filtration est formée par une pluralité de billes par exemple.

La figure 2 illustre un exemple de réalisation avec une grille 72 placée en aval de la chambre de filtration 2, c'est-à-dire au niveau de l'embout de distribution 3.

Il est à noter que l'embout de distribution 3 pourrait être une portion amovible par rapport au corps cylindrique formant la chambre de filtration 2. Dans un tel cas, la grille avale 72 peut servir non seulement d'élément de maintien de la résine de filtration 6 dans la chambre de filtration 2, mais également d'élément de protection de la portion de sortie de la résine de filtration 6.

Une grille (non représentée) peut être également placée en amont de la chambre de filtration 2. Outre les possibles fonctions de maintien et/ou de protection de la résine de filtration 6 précédemment évoquées, une telle grille peut également servir d'élément de filtration de particules éventuellement présentes dans le liquide (à filtrer) contenu dans le réservoir 1.

La chambre de filtration 2 illustrée aux figures comprend un corps principal cylindrique dans lequel est logée la résine de filtration 6 sous forme de cartouche 60, ce corps principal ayant une extrémité formant l'embout de distribution 3. Il pourrait toutefois être envisagé que la résine de filtration 6 sous forme de cartouche 60 soit directement couplée d'une part au réservoir 1 et d'autre part à un embout de distribution 3 amovible.

De préférence, la résine de filtration 6 est une résine anti-calcaire à échange d'ions. La résine de filtration 6 peut ainsi comprendre une pluralité de petites billes poreuses, de diamètre de l'ordre du millimètre par exemple. Des ions sodium (Na⁺) sont fixés sur la pluralité de billes poreuses, et peuvent être échangés avec des ions calcium (Ca²⁺) contenus dans une eau dure par exemple, lorsque l'eau dure à traiter passe dans la chambre de filtration 2.

De manière avantageuse, la résine de filtration 6 peut être facilement retirée de la chambre de filtration 2 par un utilisateur. Cela permet à un utilisateur de remplacer la résine 6 lorsque tous les ions présents sur la résine 6 ont été échangés par exemple.

L'embout de distribution 3, agencé au niveau de la deuxième extrémité de la chambre de filtration 2 est destiné à permettre un remplissage du réservoir de l'appareil de coiffure à remplir avec le liquide filtré par la résine de filtration 6 de la chambre de filtration 2.

Dans un exemple de réalisation, l'embout de distribution 3 présente une forme tubulaire allongée 30. De préférence, l'embout de distribution 3 est un bec verseur 30, ayant par exemple une forme sensiblement cylindrique ou tronconique.

Par exemple, l'embout de distribution 3 s'étend selon l'axe longitudinal XX, sur une longueur d'environ 3 cm. Ainsi, le réservoir 1, la chambre de filtration 2 et l'embout de distribution 3 sont coaxiaux.

De préférence, l'embout de distribution 3 comprend au niveau de l'extrémité de sortie une ouverture de faible dimension, par exemple une ouverture de section circulaire, dont un rayon est inférieur à 2 mm, de préférence d'environ 1.2 mm. Cela permet un remplissage précis du réservoir de l'appareil de coiffure à remplir, et permet d'éviter à un utilisateur de renverser du liquide filtré.

L'embout de distribution 3 peut aussi avoir une extrémité de sortie dont la section externe a des dimensions inférieures à un orifice de remplissage du réservoir de l'appareil à remplir, de sorte que l'embout de distribution 3 peut être inséré dans le réservoir à remplir.

De manière particulièrement avantageuse, le dispositif portable de filtration 100 comprend un système de maintien de liquide 5 dans la résine de filtration 6.

Un tel système de maintien de liquide 5 est prévu pour garantir en permanence la présence de liquide dans la résine de filtration 6, ou à minima une certaine humidité, afin de préserver les capacités filtrantes de la résine de filtration 6 et d'éviter sa dégradation prématurée. En effet, les propriétés chimiques de la résine de filtration 6 peuvent être rapidement dégradées si la résine de filtration 6 devient trop sèche.

De préférence, le système de maintien de liquide 5 est placé à l'intérieur de la résine de filtration 6. Il peut par exemple être inséré à l'intérieur de la résine de filtration 6 comme cela est représenté à la figure 2.

De manière préférée, le système de maintien de liquide 5 comprend un siphon 51.

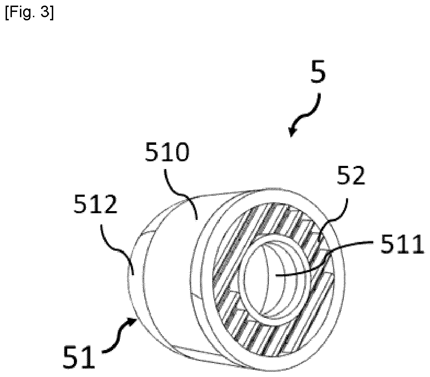

Selon un exemple de réalisation préférentiel illustré sur la figure 3, le siphon 51 peut présenter une première extrémité ouverte 510, par exemple cylindrique, dont l'ouverture est au moins en partie en contact avec la résine de filtration 6. Le siphon 51 comprend une deuxième extrémité fermée 511, par exemple hémisphérique, permettant de retenir du liquide à l'intérieur du siphon 51.

Il peut être prévu par ailleurs un organe de guidage 610 de liquide destiné à guider le liquide en provenance du réservoir 1 directement dans le système de maintien de liquide 5 avant que ce liquide ne soit transféré vers la résine de filtration 6.

A cette fin, l'organe de guidage 610 comprend de préférence une portion convergente en direction du siphon 51, cet organe de guidage étant au moins partiellement agencé à l'intérieur du siphon 51.

Par exemple, comme illustré à la figure 2, la cartouche 60 contenant la résine de filtration 6 peut comprendre, au niveau de son extrémité destinée à être du côté du réservoir 1, un organe de guidage 610 ayant une forme d'entonnoir, avec une portion convergente, par exemple une portion tronconique, et une portion tubulaire s'étendant à partir de la portion convergente, de sorte à faire converger le liquide en provenance du réservoir 1 dans le siphon 51 agencé à l'intérieur de la résine de filtration 6.

De préférence, la partie tubulaire est agencée au moins en partie à l'intérieur de la première extrémité ouverte 510 du siphon 51.

Avantageusement, la première extrémité ouverte 510 du siphon 51 est séparée de la résine de filtration 6 par une grille 52. Une telle grille 52 permet un maintien des éléments formant la résine de filtration à l'extérieur du siphon 51, mais permet aussi de filtrer des particules qui seraient contenues dans le liquide et qui auraient atteint le siphon 51 sans avoir été filtrées au préalable.

De préférence, la grille 52 est agencée entre l'organe de guidage 610 et l'organe de siphon 51 au niveau de l'extrémité ouverte 511 de l'organe de siphon 51, selon une direction radiale par rapport à l'axe longitudinal XX.

Dans l'agencement de la figure 2, la grille 52 peut avoir une forme d'anneau comme cela est illustré à la figure 3. La grille 52 a ainsi une ouverture centrale qui permet d'insérer la portion tubulaire de l'organe de guidage 610.

Le réservoir 1 du dispositif portable de filtration 100 peut comprendre au niveau de la deuxième extrémité fermée 13 un clapet 4 d'admission d'air dans le réservoir 1. Le clapet 4 est destiné à déclencher une vidange du réservoir 1 au travers de la chambre de filtration 2, vers l'embout de distribution 3. Le clapet 4 peut être actionné par pression par un utilisateur, lorsque l'utilisateur souhaite remplir avec du liquide filtré le réservoir de l'appareil de coiffure.

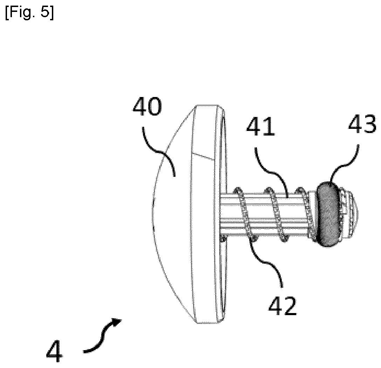

Dans un exemple de réalisation, illustré sur la figure 5, il peut s'agir d'un clapet 4 d'admission d'air comprenant un corps principal 41, de préférence cylindrique, autour duquel est disposé un ressort 42. Le clapet 4 comprend une zone d'appui 40, sur laquelle l'utilisateur peut appuyer, par exemple avec son pouce, afin de faire rentrer de l'air au niveau de la deuxième extrémité du réservoir 1.

Dans un exemple de réalisation, illustré notamment sur la figure 2, le réservoir 1 comprend au niveau de la deuxième extrémité une portion tubulaire 11, dans laquelle est inséré le corps principal 41 du clapet 4 de manière à pouvoir coulisser à l'intérieur de ladite portion tubulaire 11.

Afin de garantir l'étanchéité au liquide et à l'air au niveau de l'interface entre le clapet 4 et l'intérieur du réservoir 1 quand le clapet 4 est en position fermée, un joint d'étanchéité 43 est disposé.

Un procédé d'utilisation du dispositif portable de filtration 100 va maintenant être décrit.

Afin de remplir le réservoir d'un appareil de coiffure avec le l'eau filtrée, un utilisateur remplit le réservoir 1 du dispositif portable de filtration 100 avec de l'eau à filtrer.

Pour cela, l'utilisateur peut désassembler le réservoir 1 du reste du dispositif portable de filtration 100 (en particulier de la chambre de filtration 2), et verser du liquide à filtrer dans le réservoir 1 à travers l'extrémité ouverte 10 du réservoir 1, par exemple en disposant l'extrémité ouverte 10 sous un robinet.

L'utilisateur peut ensuite positionner la chambre de filtration 2 comprenant la résine de filtration 6, au-dessus du réservoir 1, et assembler la chambre de filtration 2 sur le réservoir 1, par vissage par exemple.

En l'absence d'admission d'air, le dispositif 100 peut être manipulé et en particulier retourné (c'est-à-dire positionné avec le réservoir 1 en haut et l'embout de distribution 2 en bas) sans que le liquide à filtrer ne sorte du réservoir 1.

Lorsque l'utilisateur actionne le clapet 4 d'admission, de l'air est admis dans le réservoir 1. Cela entraine une vidange du réservoir 1 à travers le système de maintien de liquide 5 prévu dans la résine de filtration 6, puis à travers la résine de filtration 6, jusqu'à atteindre l'embout de distribution 3.

Lors de la vidange du réservoir 1 par actionnement du clapet 4, la majeure partie du liquide à filtrer contenu dans le réservoir 1 rejoint la résine de filtration 6 après avoir traversé le système de maintien de liquide 5. Lors de l'écoulement, le liquide est progressivement filtré, de sorte qu'au niveau de l'embout de distribution 3, les ions calcium pouvant être présents dans le liquide ont été échangés. En d'autres termes, de l'eau filtrée, adoucie, s'écoule par l'embout de distribution 3. Le système de maintien de liquide 5 a quant à lui conservé une partie du liquide qui n'atteindra pas la résine de filtration 6 en utilisation normale.

Dans l'exemple de réalisation illustré, lorsqu'un utilisateur appui sur le clapet 4, le liquide à filtrer, par exemple l'eau dure contenue dans le réservoir 1 remplit le siphon 51. Le siphon 51 alimente ensuite la résine de filtration 6, la filtration s'effectue et le liquide filtré, par exemple l'eau déminéralisée, coule par le bec verseur 30 en bas. Lorsque tout le liquide présent dans le réservoir 1 s'est écoulé, du liquide reste stocké dans le siphon 51 ce qui permet à minima de maintenir la résine 6 humide. Si après utilisation, l'utilisateur positionne le dispositif portable de filtration 100 à plat, ce qui est très probable pour le stockage, le liquide présent dans le siphon 51 peut se diffuser dans la résine de filtration 6 et ainsi la maintenir humide, contribuant ainsi à sa bonne conservation.

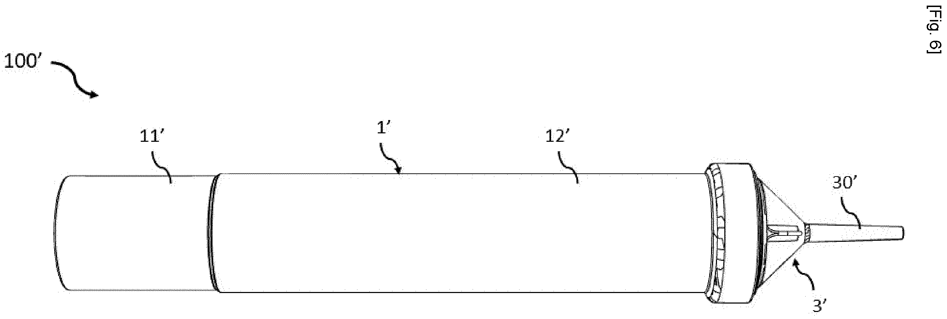

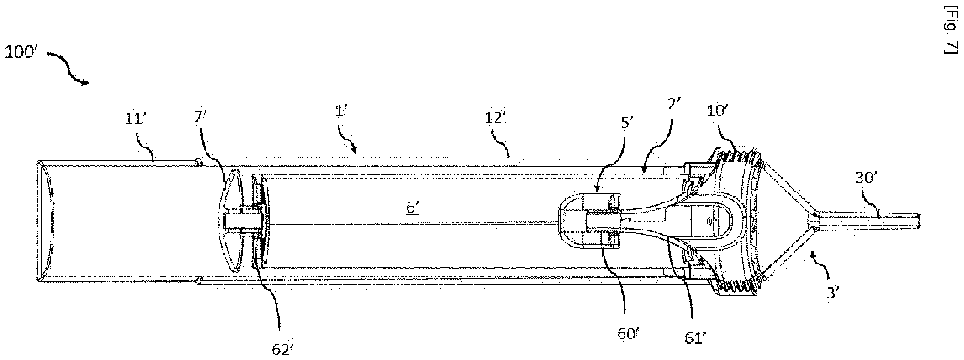

Les figures 6 à 8 illustrent un dispositif portable de filtration 100' selon un deuxième exemple de réalisation.

Le dispositif portable de filtration 100' selon ce deuxième exemple de réalisation a une structure différente de l'exemple de réalisation présenté plus haut mais il vise à répondre aux mêmes problèmes techniques. En outre, cet exemple de dispositif portable de filtration 100' est adapté pour fonctionner avec une cartouche de filtration ayant les mêmes caractéristiques principales que la cartouche de filtration présentée plus haut.

Le dispositif portable de filtration 100' peut comprendre un corps principal 1', de préférence sensiblement cylindrique, s'étendant selon un axe longitudinal XX. Le corps principal 1' est fermé à une première extrémité, formant un fond, et ouvert à une deuxième extrémité 10', de sorte à permettre un remplissage du corps principal 1' avec le liquide à filtrer.

De manière avantageuse, le dispositif peut comprendre un embout de distribution 3' amovible, pouvant être assemblé sur le corps principal 1' au niveau de la deuxième extrémité 10' ouverte, par exemple par vissage.

De préférence, l'embout amovible 3' est un bec verseur cylindrique 30' de section circulaire, et est adapté pour remplir facilement avec de l'eau filtré le réservoir de l'appareil de coiffure à remplir.

Le corps principal 1' comprend une première portion 11' s'étendant à partir de la première extrémité fermée et une résine de filtration 6'. De préférence, la première portion 11' est creuse et forme un réservoir 11' de stockage de l'eau filtrée, comme il sera décrit par la suite.

De manière avantageuse, au moins une paroi du réservoir 11' est déformable, de sorte à permettre à un utilisateur d'expulser de l'eau depuis le réservoir 11' vers la deuxième extrémité 10' du corps principal 1', en exerçant une pression sur la paroi déformable. Il peut par exemple s'agir de la paroi latérale du réservoir 11' qui est déformable tandis que le fond est plus rigide.

Le corps principal 1' comprend une deuxième portion 12' contenant la chambre de filtration 2', qui comprend la résine de filtration 6'. La deuxième portion 12' s'étend entre la première portion de réservoir 11' et l'embout de distribution 3'.

Comme pour l'exemple de réalisation des figures 1 à 5, la résine de filtration 6' peut être contenue dans une cartouche amovible 60' ayant les mêmes spécificités que la cartouche de filtration présentée précédemment. En particulier, la cartouche de filtration 60' comprend un système de maintien de liquide 5' ayant un organe de siphon 51', et un organe de guidage 610'de liquide ayant une portion convergente en direction de l'organe de siphon 51'.

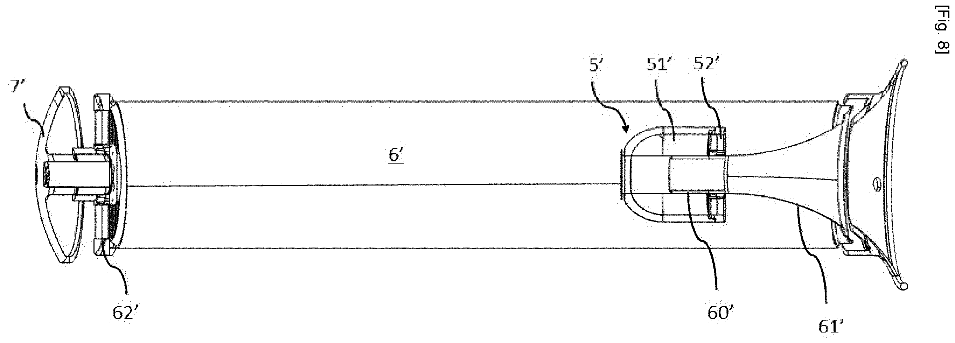

Ainsi, comme illustré sur la figure 8, la cartouche de filtration 60' comprend un organe de guidage 610' de liquide destiné à guider le liquide versé par un utilisateur via la deuxième extrémité 10' ouverte du corps principal 1' en provenance du réservoir 1 directement dans le système de maintien de liquide 5' avant que ce liquide ne soit transféré vers la résine de filtration 6'.

A cette fin, l'organe de guidage 610' comprend de préférence une portion convergente en direction du siphon 51', cet organe de guidage 610' étant au moins partiellement agencé à l'intérieur du siphon 51'.

Par exemple, comme illustré à la figure 8, la cartouche 60' contenant la résine de filtration 6' peut comprendre, au niveau de son extrémité destinée à être du côté de la deuxième extrémité 10', un organe de guidage 610' ayant une forme d'entonnoir, avec une portion convergente, par exemple une portion tronconique, et une portion tubulaire s'étendant à partir de la portion convergente, de sorte à faire converger le liquide versé par un utilisateur dans le siphon 51' agencé à l'intérieur de la résine de filtration 6'.

Le siphon 51' peut être identique au siphon 51 illustré sur la figure 3, et notamment comprendre une grille de protection 52'.

Comme précédemment, il est possible de prévoir une grille 72 placée en aval de la cartouche de filtration 60' (c'est-à-dire au niveau de l'orifice de sortie 62') et/ou une grille (non représentée) en amont de la cartouche de filtration 60' (c'est-à-dire au niveau de l'orifice d'entrée 61').

De préférence, il est par ailleurs prévu un élément de déviation 7' du flux de liquide positionné en aval de l'orifice de sortie 62' de la cartouche de filtration 6' et prévu pour diriger le liquide du réservoir 11' en direction de l'embout de distribution 3' sans atteindre l'orifice de sortie 62' de la cartouche de filtration 6' afin d'empêcher au liquide de traverser une nouvelle fois la cartouche de filtration 6'. En d'autres termes, l'élément de déviation 7' est conçu pour empêcher le liquide filtré contenu dans le réservoir 11' de pénétrer dans la cartouche de filtration 6' par l'orifice de sortie 62', tout en autorisant le liquide filtré de quitter la cartouche de filtration 6' par l'orifice de sortie 62' pour rejoindre le réservoir 11'.

De manière préférée, l'élément de déviation 7' a également une forme permettant un guidage du liquide filtré provenant de la résine de filtration 6' en direction du réservoir 11'.

Un tel élément de déviation 7' peut par exemple avoir la forme d'un parapluie ou d'un double parapluie. Alternativement, l'élément de déviation 7' pourrait comprendre un clapet anti retour.

Dans l'exemple de réalisation illustré, il existe un espace délimité entre une paroi interne de la deuxième portion 13' du corps principal 1', et une paroi externe de la chambre de filtration 2' comprenant la résine de filtration 6'. L'espace délimite une canalisation annulaire s'étendant selon la direction longitudinale. Cela permet une communication du réservoir 11' destiné à contenir de l'eau filtré et l'embout de distribution 3' à l'extrémité opposée.

Selon cette agencement, l'élément de déviation 7' permet de guider le liquide filtré contenu dans le réservoir 11' dans la canalisation, de sorte que l'eau filtrée ne peut rentrer dans la résine de filtration 6'.

Un procédé d'utilisation du dispositif portable de filtration 100' selon le deuxième exemple de réalisation va maintenant être décrit.

Ce procédé d'utilisation peut être mis en oeuvre lorsqu'un utilisateur souhaite remplir le réservoir d'un appareil de coiffure avec du liquide filtré, en particulier avec de l'eau déminéralisée.

Une première étape consiste à remplir le corps principal 1' avec le liquide à filtrer, au niveau de la deuxième extrémité 10' non assemblée avec l'embout 3'. Le liquide à filtrer s'écoule depuis la deuxième extrémité 10' à travers la résine de filtration 6' via la portion tubulaire 60'. Le liquide est donc filtré au cours du remplissage du dispositif 100'.

Le liquide s'écoule jusqu'au système de maintien de liquide dans la résine 5'. Une partie du liquide est stockée dans le système de maintien 5', par exemple dans une partie fermée du siphon 51', tandis que le reste du liquide ressort du système de maintien 5' et s'écoule à travers la résine 6'. Le liquide s'écoule en direction de la portion de réservoir 11', en étant éventuellement dévié par l'élément de déviation 7'.

Une deuxième étape est l'assemblage de l'embout de distribution 3' avec le corps principal 1', par exemple par vissage. Le dispositif 100' peut alors être retourné, de sorte que l'extrémité du corps principal 1' assemblée à l'embout 3' soit en dessous du réservoir 11'.

Lorsque l'utilisateur souhaite remplir le réservoir de l'appareil de coiffure, il peut alors positionner l'embout de distribution 3' au niveau dudit réservoir, et exercer une pression au niveau de la paroi déformable du réservoir 11'. La pression sur la paroi déformable entraine la vidange du dispositif 100'.

Le liquide filtré stocké s'écoule alors à travers l'espace annulaire latéral vers l'embout de distribution 3'.

De préférence, le liquide filtré est dévié par l'élément de déviation 7' placé à l'extrémité de la cartouche de filtration 60' et passe autour de la cartouche pour s'écouler par l'embout 3'. Le siphon 51' peut se vider, afin réhumidifier la résine de la cartouche de filtration 60'.

Ainsi, les deux exemples de réalisation présentés ont un principe de filtration identique, et notamment des cartouches de filtration semblables, mais il se distinguent à la fois par leur mode de remplissage et leur mode de vidange.

Dans l'exemple de réalisation des figures 1 et 2, la vidange est réalisée par entrée d'air via le clapet d'admission d'air 4, tandis que dans l'exemple de réalisation des figures 6 à 8, la vidange se fait par pression sur une paroi déformable du réservoir 11'.

Dans l'exemple de réalisation des figures 1 et 2, le réservoir 1 est directement rempli avec du liquide à filtrer, le liquide étant traité lors de la vidange, tandis que dans l'exemple de réalisation des figures 6 à 8, le réservoir 11' est rempli avec le liquide préalablement filtré lors de l'écoulement à travers la résine de filtration 6'.

Toutefois, on pourrait parfaitement imaginer, sans sortir du cadre de l'invention, de combiner toutes ou parties des caractéristiques des deux exemples de réalisation décrits.

En particulier, on pourrait imaginer utiliser le dispositif de vidange à clapet d'air 4 du premier exemple de réalisation dans le réservoir 11' du deuxième mode de réalisation, et ce afin d'éviter à l'utilisateur d'avoir à déformer le réservoir 11'.

Réciproquement, on pourrait imaginer équiper le réservoir 1 du premier mode de réalisation avec des parois déformables afin de remplacer le dispositif de vidange à clapet d'air 4 par une solution plus économique et plus simple.

## Revendications

1. Cartouche de filtration d'un liquide à filtrer, comprenant une résine de filtration (6 ; 6') pour filtrer le liquide à filtrer, la cartouche de filtration (60 ;60') s'étendant entre un orifice d'entrée (61 ; 61') permettant au liquide à filtrer d'accéder à la résine de filtration (6 ; 6') et un orifice de sortie (62 ; 62') permettant au liquide filtré à travers la résine de filtration (6 ; 6') de quitter la cartouche de filtration (60 ;60') ;
**caractérisé en ce que** la cartouche de filtration (60 ;60') comprend un système de maintien de liquide (5 ; 5') agencé dans la résine de filtration (6 ; 6') du côté de l'orifice d'entrée (61 ; 61'), le système de maintien de liquide (5 ; 5') comprenant un organe de siphon (51 ; 51') s'étendant entre une extrémité ouverte (511) et une extrémité fermée (512), et **en ce que** l'orifice d'entrée (61 ; 61') de la cartouche de filtration (60 ;60') comprend un organe de guidage (610 ; 610') de liquide ayant une portion convergente en direction de l'organe de siphon (51 ; 51'), l'organe de guidage (610 ; 610') étant agencé au moins en partie dans l'organe de siphon (51 ; 51') à travers l'extrémité ouverte (511).

2. Cartouche de filtration selon la revendication 1, dans lequel l'organe de guidage (610 ; 610') de liquide a une forme d'entonnoir avec une portion tubulaire s'étendant à partir de la portion convergente, la portion tubulaire étant agencée au moins en partie dans l'organe de siphon (51 ; 51') à travers l'extrémité ouverte (511).

3. Cartouche de filtration selon l'une quelconque des revendications 1 et 2, dans lequel le système de maintien de liquide (5 ; 5') comprend en outre une grille (52 ; 52') agencée entre l'organe de guidage (610 ; 610') et l'organe de siphon (51 ; 51') au niveau de l'extrémité ouverte (511) de l'organe de siphon (51 ; 51').

4. Cartouche de filtration selon l'une quelconque des revendications 1 à 3, comprenant une grille avale (72 ; 72') positionnée au niveau de l'orifice de sortie (62 ; 62') de la cartouche de filtration (60 ; 60') dans le sens de déplacement du liquide de l'orifice d'entrée (61 ; 61') vers l'orifice de sortie (62 ; 62').

5. Cartouche de filtration selon l'une quelconque des revendications 1 à 4, comprenant une grille amont positionnée avant l'orifice d'entrée (61 ; 61') de la cartouche de filtration (60 ; 60') dans le sens de déplacement du liquide de l'orifice d'entrée (61 ; 61') vers l'orifice de sortie (62 ; 62').

6. Dispositif portable de filtration d'un liquide à filtrer comprenant :
une cartouche de filtration (60 ; 60') selon l'une quelconque des revendications 1 à 5,
un réservoir (1 ; 11') de liquide pour stocker du liquide ; et
un embout de distribution (3 ; 3') pour évacuer le liquide filtré du dispositif portable de filtration.

7. Dispositif selon la revendication 6, dans lequel le réservoir et/ou la cartouche de filtration et/ou l'embout de distribution sont assemblés les uns aux autres de manière amovible.

8. Dispositif selon l'une quelconque des revendications 6 et 7, dans lequel le réservoir (1) est agencé du côté de l'orifice d'entrée (61) de la cartouche de filtration (60), et l'embout de distribution (3) est agencé du côté de l'orifice de sortie (62) de la cartouche de filtration (60).

9. Dispositif selon la revendication 8, dans lequel le réservoir (1) comprend une extrémité ouverte (10) permettant un remplissage dudit réservoir (1), l'extrémité ouverte (10) étant destinée à être en contact avec l'orifice d'entrée (61) de la cartouche de filtration (60) en position assemblée, et une extrémité fermée (11) comprenant un clapet (4) d'admission d'air destiné à déclencher une vidange du réservoir (1) au travers de la cartouche de filtration (60) vers l'embout de distribution (3).

10. Dispositif selon l'une quelconque des revendications 6 et 7, dans lequel le réservoir (11') est agencé du côté de l'orifice de sortie (62') de la cartouche de filtration (60'), et l'embout de distribution (3') est agencé du côté de l'orifice d'entrée (61') de la cartouche de filtration (60').

11. Dispositif selon la revendication 10, comprenant une portion centrale s'étendant entre le réservoir (11') et l'embout de distribution (3') dans laquelle est insérée la cartouche de filtration (60'), la portion centrale comprenant un canal de circulation de liquide du réservoir (11') vers l'embout de distribution (3').

12. Dispositif selon la revendication 11, comprenant en outre un élément de déviation (7') du flux de liquide positionné en aval de l'orifice de sortie (62') de la cartouche de filtration (60') et prévu pour diriger le liquide du réservoir (11') en direction de l'embout de distribution (3') sans atteindre l'orifice de sortie (62') de la cartouche de filtration (60') afin d'empêcher au liquide de traverser une nouvelle fois la cartouche de filtration (60').

13. Dispositif selon l'une quelconque des revendications 6 et 7, dans lequel le réservoir et l'embout de distribution sont tous deux agencés du côté de l'orifice de sortie de la cartouche de filtration, le réservoir étant positionné entre la cartouche de filtration et l'embout de distribution.

14. Dispositif selon l'une quelconque des revendications 10 à 13, comprenant en outre une valve prévue pour empêcher un écoulement du réservoir vers l'embout de distribution tant qu'une force suffisante n'est pas exercée sur des parois du réservoir.

15. Dispositif selon l'une quelconque des revendications 6 à 14, dans lequel le réservoir a une capacité inférieure à 50mL, de préférence comprise entre 30mL et 40mL.

16. Dispositif selon l'une quelconque des revendications 6 à 15, dans lequel l'embout de distribution (3 ; 3') est un bec verseur cylindrique avec une section circulaire de sortie ayant un rayon inférieur à 2 mm.

17. Système de coiffure comprenant un appareil de coiffure avec réservoir de liquide et un dispositif portable de filtration selon l'une quelconque des revendications 6 à 16, le réservoir de liquide de l'appareil de coiffure ayant un orifice de remplissage prévu pour un couplage amovible de l'embout de distribution (3 ; 3') du dispositif portable de filtration.

## Patentansprüche

1. Filterkartusche für eine zu filtrierende Flüssigkeit, umfassend ein Filterharz (6; 6') zum Filtrieren der zu filtrierenden Flüssigkeit, wobei sich die Filterkartusche (60: 60') zwischen einer Eingangsöffnung (61; 61'), die der zu filtrierenden Flüssigkeit ermöglicht, zum Filterharz (6; 6') zu gelangen, und einer Ausgangsöffnung (62; 62'), die der durch das Filterharz (6; 6') filtrierten Flüssigkeit ermöglicht, die Filterkartusche (60; 60') zu verlassen, erstreckt;
**dadurch gekennzeichnet, dass** die Filterkartusche (60; 60') ein Flüssigkeitshaltesystem (5; 5') umfasst, das im Filterharz (6; 6') auf der Seite der Eingangsöffnung (61; 61') eingerichtet ist, wobei das Flüssigkeitshaltesystem (5; 5') ein Absaugorgan (51; 51') umfasst, das sich zwischen einem offenen Ende (511) und einem geschlossenen Ende (512) erstreckt, und dadurch, dass die Eingangsöffnung (61; 61') der Filterkartusche (60; 60') ein Flüssigkeitsführungsorgan (610; 610') umfasst, das einen in Richtung des Absaugorgans (51; 51') konvergierenden Abschnitt aufweist, wobei das Führungsorgan (610; 610') zumindest teilweise im Absaugorgan (51; 51') durch das offene Ende (511) eingerichtet ist.

2. Filterkartusche nach Anspruch 1, wobei das Flüssigkeitsführungsorgan (610; 610') eine Trichterform mit einem rohrförmigen Abschnitt aufweist, der sich ausgehend vom konvergierenden Abschnitt erstreckt, wobei der rohrförmige Abschnitt zumindest teilweise im Absaugorgan (51; 51') durch das offene Ende (511) eingerichtet ist.

3. Filterkartusche nach einem der Ansprüche 1 und 2, wobei das Flüssigkeitshaltesystem (5; 5') weiter ein Gitter (52; 52') umfasst, das zwischen dem Führungsorgan (610; 610') und dem Absaugorgan (51; 51') am offenen Ende (511) des Absaugorgans (51; 51') eingerichtet ist.

4. Filterkartusche nach einem der Ansprüche 1 bis 3, umfassend ein stromabwärtiges Gitter (72; 72'), das sich an der Ausgangsöffnung (62; 62') der Filterkartusche (60; 60') in der Bewegungsrichtung der Flüssigkeit von der Eingangsöffnung (61; 61') zu der Ausgangsöffnung (62; 62') befindet.

5. Filterkartusche nach einem der Ansprüche 1 bis 4, umfassend ein stromaufwärtiges Gitter, das sich vor der Eingangsöffnung (61; 61') der Filterkartusche (60; 60') in der Bewegungsrichtung der Flüssigkeit von der Eingangsöffnung (61; 61') zu der Ausgangsöffnung (62; 62') befindet.

6. Tragbare Flüssigkeitsfiltervorrichtung für eine zu filtrierende Flüssigkeit, umfassend:
eine Filterkartusche (60; 60') nach einem der Ansprüche 1 bis 5,
einen Flüssigkeitsbehälter (1; 11') zum Speichern von Flüssigkeit; und
eine Tülle (3; 3') zum Abführen der filtrierten Flüssigkeit aus der tragbaren Filtervorrichtung.

7. Vorrichtung nach Anspruch 6, wobei der Behälter und/oder die Filterkartusche und/oder die Tülle auf abnehmbare Weise zusammengefügt sind.

8. Vorrichtung nach einem der Ansprüche 6 und 7, wobei der Behälter (1) auf der Seite der Eingangsöffnung (61) der Filterkartusche (60) eingerichtet ist und die Tülle (3) auf der Seite der Ausgangsöffnung (62) der Filterkartusche (60) eingerichtet ist.

9. Vorrichtung nach Anspruch 8, wobei der Behälter (1) ein offenes Ende (10) umfasst, das ein Füllen des Behälters (1) ermöglicht, wobei das offene Ende (10) dazu vorgesehen ist, in der zusammengefügten Position die Eingangsöffnung (61) der Filterkartusche (60) zu berühren, und ein geschlossenes Ende (11), das eine Lufteinlassklappe (4) umfasst, die dazu vorgesehen ist, eine Entleerung des Behälters (1) durch die Filterkartusche (60) zu der Tülle (3) zu ermöglichen.

10. Vorrichtung nach einem der Ansprüche 6 und 7, wobei der Behälter (11') auf der Seite der Ausgangsöffnung (62') der Filterkartusche (60') eingerichtet ist und die Tülle (3') auf der Seite der Eingangsöffnung (61') der Filterkartusche (60') eingerichtet ist.

11. Vorrichtung nach Anspruch 10, umfassend einen mittleren Abschnitt, der sich zwischen dem Behälter (11') und der Tülle (3') erstreckt, in dem die Filterkartusche (60') eingefügt ist, wobei der mittlere Abschnitt einen Zirkulationskanal von Flüssigkeit des Behälters (11') zu der Tülle (3') umfasst.

12. Vorrichtung nach Anspruch 11, weiter umfassend ein Umleitungselement (7') des Flüssigkeitsstroms, das sich stromabwärts der Ausgangsöffnung (62') der Filterkartusche (60') befindet und dazu vorgesehen ist, die Flüssigkeit des Behälters (11') in Richtung der Tülle (3') umzuleiten, ohne die Ausgangsöffnung (62') der Filterkartusche (60') zu erreichen, um zu verhindern, dass die Flüssigkeit erneut die Filterkartusche (60') durchströmt.

13. Vorrichtung nach einem der Ansprüche 6 und 7, wobei sowohl der Behälter als auch die Tülle auf der Seite der Ausgangsöffnung der Filterkartusche eingerichtet sind, wobei sich der Behälter zwischen der Filterkartusche und der Tülle befindet.

14. Vorrichtung nach einem der Ansprüche 10 bis 13, weiter ein Ventil umfassend, das dazu vorgesehen ist, ein Abfließen aus dem Behälter zu der Tülle zu verhindern, solange keine ausreichende Kraft auf die Wände des Behälters ausgeübt wird.

15. Vorrichtung nach einem der Ansprüche 6 bis 14, wobei der Behälter ein Fassungsvermögen von weniger als 50 mL, vorzugsweise zwischen 30 mL und 40 mL aufweist.

16. Vorrichtung nach einem der Ansprüche 6 bis 15, wobei die Tülle (3; 3') ein zylindrischer Ausgießer mit kreisförmigem Ausgangsquerschnitt mit einem Durchmesser von weniger als 2 mm ist.

17. Frisursystem, umfassend ein Frisureinrichtung mit Flüssigkeitsbehälter und eine tragbare Filtervorrichtung nach einem der Ansprüche 6 bis 16, wobei der Flüssigkeitsbehälter des Frisureinrichtungs eine Füllungsöffnung aufweist, die für eine abnehmbare Kopplung der Tülle (3; 3') der tragbaren Filtervorrichtung vorgesehen ist.

## Claims

1. Cartridge for filtering a liquid to be filtered, comprising a filtering resin (6; 6') to filter the liquid to be filtered, the filtering cartridge (60; 60') extending between an inlet orifice (61; 61') enabling the liquid to be filtered to access the filtering resin (6; 6') and an outlet orifice (62; 62') enabling the liquid filtered through the filtering resin (6; 6') to exit the filtering cartridge (60; 60');
**characterised in that** the filtering cartridge (60; 60') comprises a liquid holding system (5; 5') arranged in the filtering resin (6; 6') on the side of the inlet orifice (61; 61'), the liquid holding system (5; 5') comprising a siphon member (51; 51') extending between an open end (511) and a closed end (512), and **in that** the inlet orifice (61; 61') of the filtering cartridge (60; 60') comprises a liquid guide member (610; 610') having a convergent portion in the direction of the siphon member (51; 51'), the guide member (610; 610') being arranged at least partially in the siphon member (51; 51') through the open end (511).

2. Filtering cartridge according to claim 1, wherein the liquid guide member (610; 610') has a funnel shape with a tubular portion extending from the convergent portion, the tubular portion being arranged at least partially in the siphon member (51; 51') through the open end (511).

3. Filtering cartridge according to any one of claims 1 and 2, wherein the liquid holding system (5; 5') further comprises a grid (52; 52') arranged between the guide member (610; 610') and the siphon member (51; 51') at the open end (511) of the siphon member (51; 51').

4. Filtering cartridge according to any one of claims 1 to 3, comprising a downstream grid (72; 72') positioned at the outlet orifice (62; 62') of the filtering cartridge (60; 60') in the movement direction of the liquid from the inlet orifice (61; 61') to the outlet orifice (62; 62').

5. Filtering cartridge according to any one of claims 1 to 4, comprising an upstream grid positioned before the inlet orifice (61; 61') of the filtering cartridge (60; 60') in the movement direction of the liquid from the inlet orifice (61; 61') to the outlet orifice (62; 62').

6. Portable device for filtering a liquid to be filtered, comprising:
a filtering cartridge (60' 60') according to any one of claims 1 to 5,
a liquid reservoir (1; 11') for storing the liquid; and
a dispensing nozzle (3; 3') for discharging the filtered liquid from the portable filtering device.

7. Device according to claim 6, wherein the reservoir and/or the filtering cartridge and/or the dispensing nozzle are removably assembled to one another.

8. Device according to any one of claims 6 and 7, wherein the reservoir (1) is arranged on the side of the inlet orifice (61) of the filtering cartridge (60), and the dispensing nozzle (3) is arranged on the side of the outlet orifice (62) of the filtering cartridge (60).

9. Device according to claim 8, wherein the reservoir (1) comprises an open end (10) enabling a filling of said reservoir (1), the open end (10) being intended to be in contact with the inlet orifice (61) of the filtering cartridge (60) in the assembled position, and a closed end (11) comprising an air inlet valve (4) intended to trigger a draining of the reservoir (1) through the filtering cartridge (60) to the dispensing nozzle (3).

10. Device according to any one of claims 6 and 7, wherein the reservoir (11') is arranged on the side of the outlet orifice (62') of the filtering cartridge (60'), and the dispensing nozzle (3') is arranged on the side of the inlet orifice (61') of the filtering cartridge (60').

11. Device according to claim 10, comprising a central portion extending between the reservoir (11') and the dispensing nozzle (3') wherein is inserted the filtering cartridge (60'), the central portion comprising a channel for circulating liquid from the reservoir (11') to the dispensing nozzle (3').

12. Device according to claim 11, further comprising an element for bypassing (7') the liquid flow positioned downstream from the outlet orifice (62') of the filtering cartridge (60') and provided to direct the liquid from the reservoir (11') in the direction of the dispensing nozzle (3') without reaching the outlet orifice (62') of the filtering cartridge (60') in order to prevent the liquid from again passing through the filtering cartridge (60').

13. Device according to any one of claims 6 and 7, wherein the reservoir and the dispensing nozzle are both arranged on the side of the outlet orifice of the filtering cartridge, the reservoir being positioned between the filtering cartridge and the dispensing nozzle.

14. Device according to any one of claims 10 to 13, further comprising a valve provided to prevent a flow from the reservoir to the dispensing nozzle as long as a sufficient force is not exerted on the walls of the reservoir.

15. Device according to any one of claims 6 to 14, wherein the reservoir has a capacity of less than 50 ml, preferably of between 30 ml and 40 ml.

16. Device according to any one of claims 6 to 15, wherein the dispensing nozzle (3; 3') is a cylindrical pouring spout with a circular outlet section having a radius of less than 2 mm.

17. Hairstyling system comprising a hairstyling appliance with a liquid reservoir and a portable filtering device according to any one of claims 6 to 16, the liquid reservoir of the hairstyling appliance having a filling orifice provided for a removable coupling of the dispensing nozzle (3; 3') of the portable filtering device.
